# EUROPEAN PATENT APPLICATION

(11) **EP 4 694 488 A1**
(43) Date of publication of application: **11.02.2026**
(21) Application number: 23932116.9
(22) Date of filing: 07.04.2023
(51) Int. Cl.: H04W 72/232, H04W 72/231

(54) **TERMINAL AND WIRELESS COMMUNICATION METHOD**

(71) Applicant: NTT DOCOMO, INC., Tokyo 100-6150 (JP)
(72) Inventor: OKANO Mayuko, Tokyo 100-6150 (JP); HARADA Hiroki, Tokyo 100-6150 (JP); OKAMURA Masaya, Tokyo 100-6150 (JP)
(74) Representative: Hoffmann Eitle
(86) International application number: PCT/JP2023/014466
(87) International publication number: WO 2024/209706

(57) **Abstract**

A terminal receives single downlink control information that instructs scheduling targeted for a combination of multiple cells. The terminal assumes that a scheduling cell that receives the downlink control information and a scheduled cell instructed by the downlink control information are targets of the multiple cells.

## Description

### TECHNICAL FIELD

The present disclosure relates to a terminal and a radio communication method that supports a mechanism for scheduling data channels transmitted by multiple carriers, using single downlink control information transmitted by a specific carrier.

### BACKGROUND ART

The 3rd Generation Partnership Project (3GPP: Registered Trademark) has prepared a specification for the 5th generation mobile communication system (which may be called 5G, New Radio (NR), or Next Generation (NG)), and is also in the process of specifying the next generation called Beyond 5G, 5G Evolution, or 6G.

In 3GPP Release 18, the introduction of a function for scheduling PDSCH (Physical Downlink Shared Channel)/PUSCH (Physical Uplink Shared Channel) which are transmitted by multiple component carriers (CC) using single downlink control information (DCI) has been discussed (Non-Patent Literature 1). This function is called Single DCI Multi-carrier PDSCH/PUSCH scheduling or Single DCI Multi-Cell PDSCH/PUSCH scheduling (hereinafter, it will be described as Single DCI Multi-Cell PDSCH/PUSCH scheduling) .

In order to support the Single DCI Multi-Cell PDSCH/PUSCH scheduling, a single DCI format (which may be called DCI format 0_X/1_X, etc.) with which it is possible to perform scheduling on the PDSCH/PUSCH of multiple cells has been agreed (Non-Patent Literature 2).

By using DCI according to the DCI format, it is possible to perform scheduling on multiple cells included in a combination of multiple cells (Set of cells) simultaneously.

### CITATION LIST

### NON-PATENT LITERATURE

Non-Patent Literature 1: "New WID on Multi-carrier enhancements", RP-213577, 3GPP TSG RAN Meeting #94e, 3GPP, December 2021
Non-Patent Literature 2: "RAN1 Chair's Notes", 3GPP TSG RAN WG1 #109-e, 3GPP, May 2022

### SUMMARY OF INVENTION

When Single DCI Multi-Cell PDSCH/PUSCH scheduling described above is supported, the following problem is considered. Specifically, there is a concern that a terminal (User Equipment, UE) cannot configure an appropriate cell or carrier even if the configuration regarding the existing cell and carrier is applied as it is.

Therefore, the present disclosure has been made in view of such a situation, and an object of the present disclosure is to provide a terminal and a radio communication method with which it is possible to perform an appropriate configuration even when scheduling is performed simultaneously for multiple cells using Single DCI Multi-Cell PDSCH/PUSCH scheduling.

An aspect of the present disclosure is a terminal (UE 200) including: a reception unit (control signal and reference signal processing unit 240) that receives single downlink control information that instructs scheduling targeted for a combination of multiple cells; and
a control unit (control unit 270) that assumes that a scheduling cell that receives the downlink control information and a scheduled cell instructed by the downlink control information are targets of the multiple cells.

An aspect of the present disclosure is a terminal (UE 200) including: a reception unit (control signal and reference signal processing unit 240) that receives single downlink control information that instructs scheduling targeted for a combination of multiple cells; and a control unit (control unit 270) that assumes that the scheduling is applied to at least one of a scheduling cell that receives the downlink control information and a scheduled cell instructed by the downlink control information.

### BRIEF DESCRIPTION OF DRAWINGS

[FIG. 1] FIG. 1 is an overall schematic diagram of a radio communication system 10 according to a present embodiment.
[FIG. 2] FIG. 2 is a diagram illustrating frequency bands used in the radio communication system 10.
[FIG. 3] FIG. 3 is a diagram illustrating a configuration example of radio frames, sub-frames, and slots used in the radio communication system 10.
[FIG. 4] FIG. 4 is a functional block configuration diagram of gNB 100 and UE 200.
[FIG. 5] FIG. 5 is a diagram illustrating an example of a scheduling scheme that can be supported by the radio communication system 10.
[FIG. 6] FIG. 6 is a diagram illustrating an example of PDSCH scheduling using Single DCI Multi-Cell PDSCH/PUSCH scheduling.
[FIG. 7] FIG. 7 is a diagram illustrating a notification example of parameters of carrier indication in Single DCI Multi-Cell PDSCH/PUSCH scheduling.
[FIG. 8] FIG. 8 is a diagram illustrating a configuration example of Single DCI Multi-Cell PDSCH/PUSCH scheduling using an RRC parameter related to Opt. 1 of an operation example.
[FIG. 9] FIG. 9 is a diagram illustrating a configuration example of Single DCI Multi-Cell PDSCH/PUSCH scheduling using an RRC parameter related to Opt. 2 of an operation example.
[FIG. 10] FIG. 10 is a diagram illustrating a configuration example of a joint coding/encoding/indication table when Single DCI Multi-Cell PDSCH/PUSCH scheduling is applied (in the case of Opt. 1).
[FIG. 11] FIG. 11 is a diagram illustrating a configuration example of the joint coding/encoding/indication table when Single DCI Multi-Cell PDSCH/PUSCH scheduling is applied (in the case of Opt. 2).
[FIG. 12] FIG. 12 is a diagram illustrating an example of a hardware configuration of the gNB 100 and the UE 200.
[FIG. 13] FIG. 13 is a diagram illustrating a configuration example of a vehicle 2001.

### DESCRIPTION OF EMBODIMENT

An embodiment will be described below with reference to the drawings. Note that the same or similar reference numerals have been attached to the same functions and configurations, and a description thereof will be omitted as appropriate.

### (1) Overall schematic configuration of radio communication system

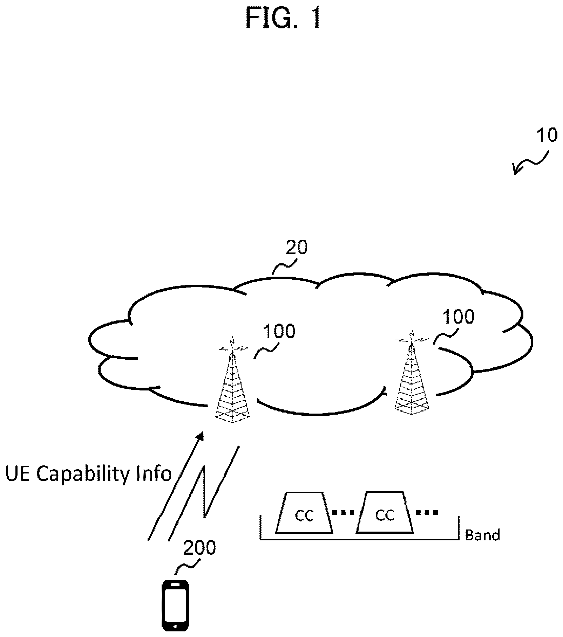

FIG. 1 is an overall schematic diagram of a radio communication system 10 according to the present embodiment. The radio communication system 10 is a radio communication system according to 5G New Radio (NR), and includes a Next Generation-Radio Access Network 20 (hereinafter, it will be referred to as NG-RAN 20) and a terminal 200 (User Equipment 200; hereinafter, it will be referred to as UE 200).

Here, the radio communication system 10 may be a radio communication system according to a scheme called Beyond 5G, 5G Evolution, or 6G.

The NG-RAN 20 includes a radio base station 100 (hereinafter, it will be referred to as gNB 100). Here, the specific configuration of the radio communication system 10 including the number of the gNBs and the UEs is not limited to the example illustrated in FIG. 1.

The NG-RAN 20 actually includes a plurality of NG-RAN nodes, specifically gNBs (or ng-eNBs), and is connected to the core network (5GC not illustrated) according to 5G. Here, the NG-RAN 20 and 5GC may be simply referred to as a "network".

The gNB 100 is a radio base station according to NR, and performs a radio communication with the UE 200 according to NR. The gNB 100 and the UE 200 can support Massive MIMO that generates a beam BM with higher directivity by controlling radio signals transmitted from multiple antenna elements, carrier aggregation (CA) that uses multiple component carriers (CCs) bundled together, dual connectivity (DC) that simultaneously performs communication between the UE and each of the NG-RAN nodes, and the like.

The type of DC may be Multi-RAT Dual Connectivity (MR-DC) which utilizes a plurality of radio access technologies, or NR-NR Dual Connectivity (NR-DC) which utilizes only NR. In addition, the MR-DC may be E-UTRA-NR Dual Connectivity (EN-DC) in which the eNB constitutes a master node (MN) and the gNB constitutes a secondary node (SN), or NR-E-UTRA Dual Connectivity (NE-DC) in which the gNB constitutes a master node (MN) and the eNB constitutes a secondary node (SN).

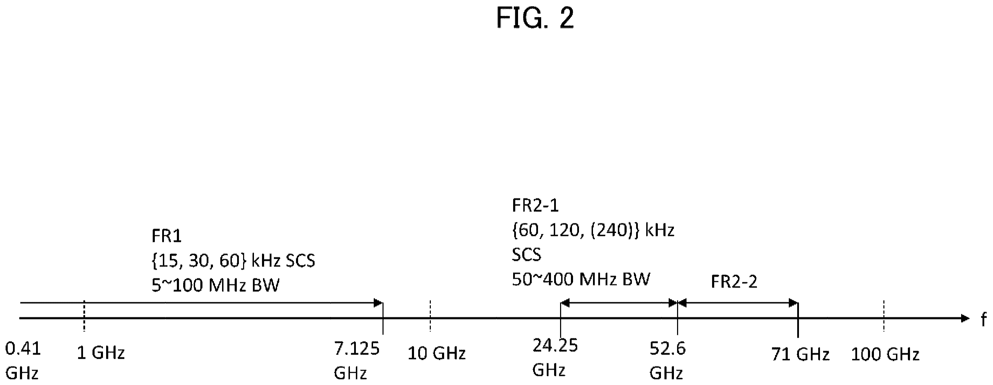

Further, the radio communication system 10 may support multiple frequency ranges (FRs). FIG. 2 is a diagram illustrating frequency bands used in the radio communication system 10.
- FR1: 410 MHz to 7.125 GHz
- FR2:
   - FR2-1: 24.25 GHz to 52.6 GHz
   - FR2-2: Over 52.6 GHz to 71 GHz

In FR1, sub-carrier spacing (SCS) of 15, 30, or 60 kHz and a bandwidth (BW) of 5 to 100 MHz may be used. FR2 has a higher frequency than FR1, and SCS of 60 or 120 kHz (may include 240 kHz) may be used, and a bandwidth (BW) of 50 to 400 MHz may be used.

Further, the radio communication system 10 also supports a higher frequency band than that of FR2. Specifically, the radio communication system 10 supports a frequency band exceeding 52.6 GHz and up to 114.25 GHz.

In addition, Cyclic Prefix-Orthologous Frequency Division Multiplexing (CP-OFDM)/Discrete Fourier Transform-Spread (DFT-S-OFDM) having larger Sub-Carrier Spacing (SCS) may be applied. Further, the DFT-S-OFDM may be applied not only to a downlink (DL), but also to an uplink (UL).

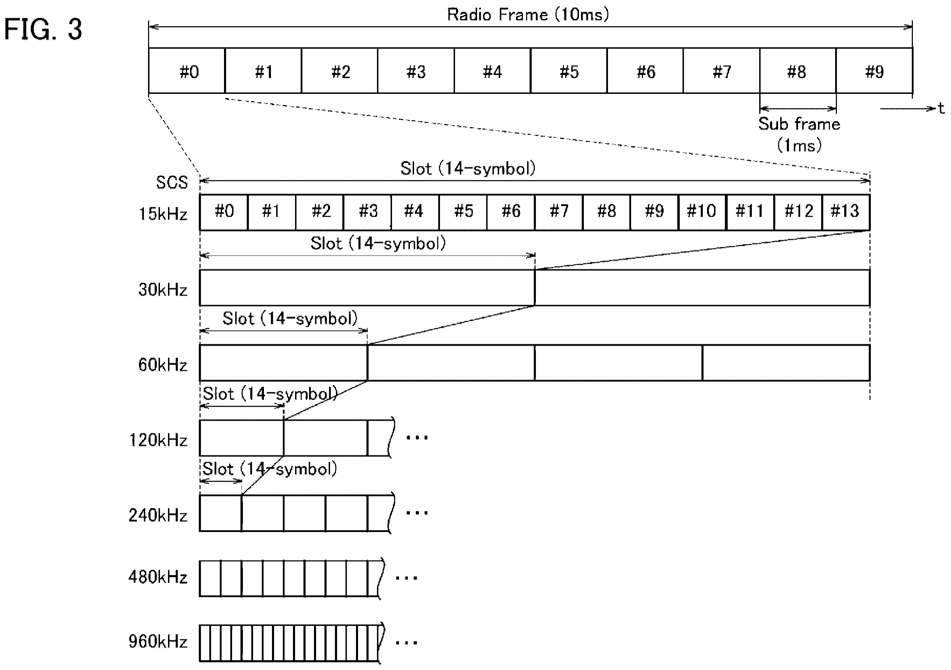

FIG. 3 is a diagram illustrating a configuration example of radio frames, sub-frames, and slots used in the radio communication system 10.

As illustrated in FIG. 3, one slot is constituted of 14 symbols, and the symbol period (and slot period) becomes shorter as the SCS becomes larger (wider). Note that the number of symbols constituting one slot may not necessarily be 14 symbols (for example, 28 or 56 symbols). Further, the number of slots for each subframe may vary depending on the SCS. Furthermore, the SCS may be wider than 240 kHz (for example, as illustrated in FIG. 3, 480 kHz, 960 kHz) .

The time direction (t) illustrated in FIG. 2 may be referred to as a time domain, a symbol period, symbol time, or the like. In addition, the frequency direction may be referred to as a frequency domain, a resource block, a resource block group (RBG), a sub-carrier, a bandwidth part (BWP), or the like.

In the radio communication system 10, the function relating to multiple carriers (specifically, CCs) may be extended as described above. Specifically, the radio communication system 10 may support the function (single DCI multi-slot PDSCH/PUSCH scheduling) for scheduling PDSCH (Physical Downlink Shared Channel)/PUSCH (Physical Uplink Shared Channel) transmitted by multiple slots, using the single downlink control information (DCI).

Specifically, the radio communication system 10 may support the following scheduling schemes: a scheduling scheme (self-carrier scheduling) in which the scheduling DCI and the channel to be scheduled are on the same CC; a cross-carrier scheduling scheme to which scheduling of the channels is applied across multiple CCs; and a scheduling scheme (multi-carrier scheduling) in which the channels are assigned to multiple different CCs using single DCI, that is one DCI.

More specifically, the radio communication system 10 may support the function for scheduling PDSCH/PUSCH transmitted by multiple CCs using the single DCI (Single DCI Multi-carrier PDSCH/PUSCH scheduling or Single DCI Multi-Cell PDSCH/PUSCH scheduling). Hereinafter, it will be referred to as Single DCI Multi-Cell PDSCH/PUSCH scheduling.

While single DCI multi-slot PDSCH/PUSCH scheduling and Single DCI Multi-Cell PDSCH/PUSCH scheduling are available such that only one of them can be used and simultaneous use of both need not be possible, the radio communication system 10 may support the simultaneous use of both.

Further, in order to support such Single DCI Multi-Cell PDSCH/PUSCH scheduling, in the radio communication system 10, a single DCI format (may be called DCI format 0_X/1_X, or DCI format 0_3/1_3, or the like) with which it is possible to perform scheduling on PDSCH/PUSCH of multiple cells may be used. By using DCI according to the DCI format, it is possible to perform scheduling on multiple cells included in a combination of multiple cells (Set of cells) simultaneously.

### (2) Functional block configuration of radio communication system

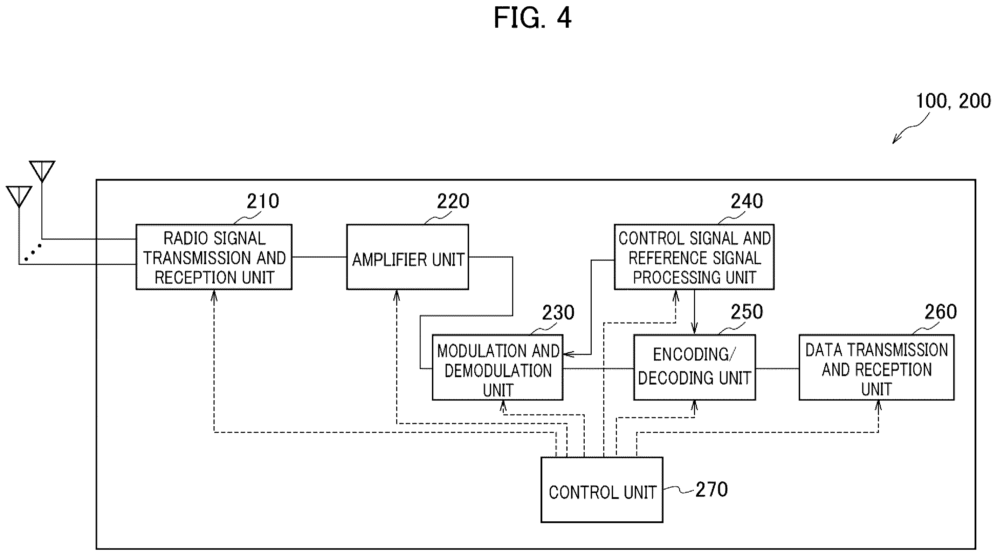

Next, a functional block configuration of the radio communication system 10 will be described. Specifically, a functional block configuration of the UE 200 will be described. FIG. 4 is a functional block configuration diagram of the gNB 100 and the UE 200.

As illustrated in FIG. 4, the UE 200 includes a radio signal transmission and reception unit 210, an amplifier unit 220, a modulation and demodulation unit 230, a control signal and reference signal processing unit 240, an encoding/decoding unit 250, a data transmission and reception unit 260, and a control unit 270.

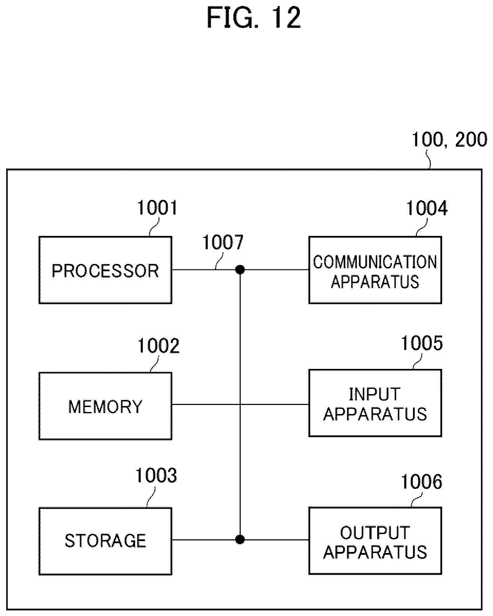

Note that only the main functional blocks relating to the description of the embodiment are illustrated in FIG. 4, and the UE 200 (gNB 100) includes other functional blocks (for example, power supply unit). In addition, FIG. 4 illustrates a functional block configuration of the UE 200, and please refer to FIG. 12 for a hardware configuration thereof.

The radio signal transmission and reception unit 210 transmits and receives radio signals according to NR. The radio signal transmission and reception unit 210 supports Massive MIMO that generates a beam BM with high directivity by controlling radio (RF) signals transmitted from a plurality of antenna elements, carrier aggregation (CA) that uses multiple component carriers (CCs) bundled together, dual connectivity (DC) that simultaneously performs communication between the UE and each of two NG-RAN nodes, and the like.

The amplifier unit 220 includes a PA (Power Amplifier)/LNA (Low Noise Amplifier) and the like. The amplifier unit 220 amplifies a signal output from the modulation and demodulation unit 230 to a predetermined power level. The amplifier unit 220 also amplifies an RF signal output from the radio signal transmission and reception unit 210.

The modulation and demodulation unit 230 performs data modulation and demodulation, a transmission power configuration, a resource block allocation, and the like for each predetermined communication destination (such as gNB 100). Cyclic Prefix-Orthogonal Frequency Division Multiplexing (CP-OFDM)/Discrete Fourier Transform-Spread (DFT-S-OFDM) may be applied in the modulation and demodulation unit 230. In addition, the DFT-S-OFDM may be used not only for an uplink (UL), but also for a downlink (DL).

The control signal and reference signal processing unit 240 performs processing relating to various control signals transmitted and received by the UE 200, and processing relating to various reference signals transmitted and received by the UE 200.

Specifically, the control signal and reference signal processing unit 240 receives various control signals transmitted from the gNB 100 via a predetermined control channel, for example, the control signals for the radio resource control layer (RRC). The control signal and reference signal processing unit 240 also transmits various control signals to the gNB 100 via a predetermined control channel.

The control signal and reference signal processing unit 240 performs processing using a reference signal (RS), such as a demodulation reference signal (DMRS) and a phase tracking reference signal (PTRS).

The DMRS is a terminal-specific reference signal (pilot signal) for estimating a fading channel used for data demodulation, which is known between a base station and the terminal. The PTRS is a terminal-specific reference signal for the purpose of estimating phase noise which becomes a problem in a high frequency band.

The reference signals may include, in addition to the DMRS and the PTRS, a Channel State Information-Reference Signal (CSI-RS), a Sounding Reference Signal (SRS), and a Positioning Reference Signal (PRS) for position information.

The channels include control channels and data channels. The control channels may include a PDCCH (Physical Downlink Control Channel), a PUCCH (Physical Uplink Control Channel), an RACH (Random Access Channel), Downlink Control Information (DCI) including a Random Access Radio Network Temporary Identifier (RA-RNTI), a Physical Broadcast Channel (PBCH), and the like.

In addition, the data channels may include a PDSCH, a PUSCH, and the like. The data may refer to data transmitted via the data channel.

The control signal and reference signal processing unit 240 can receive the downlink control information (DCI) transmitted from the network. Specifically, the control signal and reference signal processing unit 240 can receive the DCI according to the DCI format specified in 3GPP TS38.212. In particular, in the present embodiment, the control signal and reference signal processing unit 240 can receive the scheduling DCI for UL and DL. More specifically, the control signal and reference signal processing unit 240 can receive the DCI according to DCI format 0_0, 0_1, 0_2, 1_0, 1_1, 1_2.

Further, in the present embodiment, the control signal and reference signal processing unit 240 may receive the DCI according to DCI format 0_3, 1_3 for Single DCI Multi-Cell PDSCH/PUSCH scheduling.

The DCI format 0_0, 0_1, 0_2, 0_3 may be interpreted as a scheduling grant of UL. The DCI format 1_0, 1_1, 1_2, 1_3 may be interpreted as a scheduling assignment of DL.

The control signal and reference signal processing unit 240 can receive the DCI corresponding to single DCI multi-slot PDSCH/PUSCH scheduling, and the DCI corresponding to Single DCI Multi-Cell PDSCH/PUSCH scheduling.

Specifically, regarding Single DCI multi-slot PDSCH/PUSCH scheduling, the control signal and reference signal processing unit 240 can receive the single (one ) DCI for scheduling channels transmitted by multiple slots. Further, regarding Single DCI Multi-Cell PDSCH/PUSCH scheduling, the control signal and reference signal processing unit 240 can receive the single (one ) DCI for scheduling channels transmitted by multiple carriers.

Here, the channels may include the control channels and data channels described above, and may not be particularly limited in the uplink direction and the downlink direction, and may typically mean at least one of PDSCH or PUSCH. The carrier may mean a component carrier (CC), and may be interpreted simply as a carrier or subcarrier.

Further, the control signal and reference signal processing unit 240 may transmit capability information of the UE 200 to the network. In particular, in the present embodiment, the control signal and reference signal processing unit 240 can transmit the UE Capability Information (see FIG. 1) relating to scheduling to the gNB 100.

The control signal and reference signal processing unit 240 may transmit the UE Capability Information relating to scheduling based on the assumption of the terminal capability (UE Capability) relating to scheduling of the UE 200 performed by the control unit 270.

As described above, the control signal and reference signal processing unit 240 may perform the processing relating to the radio resource control layer (RRC), and may transmit or receive a message of the RRC layer. The control signal and reference signal processing unit 240 may receive the single downlink control information (DCI) that instructs scheduling targeted for a combination of multiple cells (Set of cells). In the present embodiment, the control signal and reference signal processing unit 240 may constitute a reception unit.

Specifically, the control signal and reference signal processing unit 240 may receive the DCI (DCI according to DCI format 0_X/1_X) that instructs scheduling targeted for a Set of cells using Single DCI Multi-Cell PDSCH/PUSCH scheduling.

The encoding/decoding unit 250 performs data division/concatenation, channel coding/decoding, and the like for each predetermined communication destination (gNB 100 or another gNB).

Specifically, the encoding/decoding unit 250 divides the data output from the data transmission and reception unit 260 into predetermined sizes, and performs channel coding on the divided data. Further, the encoding/decoding unit 250 decodes the data output from the modulation and demodulation unit 230, and concatenates the decoded data.

The data transmission and reception unit 260 transmits and receives Protocol Data Unit (PDU) and Service Data Unit (SDU). Specifically, the data transmission and reception unit 260 performs assembly/disassembly of PDU/SDU in multiple layers (Media Access Control Layer (MAC), Radio Link Control Layer (RLC), Packet Data Convergence Protocol Layer (PDCP), and the like). In addition, the data transmission and reception unit 260 performs error correction and retransmission control of data based on a Hybrid automatic repeat request (HARQ).

The control unit 270 controls each functional block constituting the UE 200. In particular, in the present embodiment, the control unit 270 controls the transmission or reception of channels (for example, PDSCH/PUSCH; hereinafter, the same shall be applied) based on the DCI for single DCI multi-slot PDSCH/PUSCH scheduling.

In addition, the control unit 270 controls the transmission or reception of channels based on the DCI for Single DCI Multi-Cell PDSCH/PUSCH scheduling.

Thus, the control unit 270 may control the transmission or reception of channels based on at least one of the DCI for single DCI multi-slot PDSCH/PUSCH scheduling and the DCI for Single DCI Multi-Cell PDSCH/PUSCH scheduling. Further, single DCI multi-slot PDSCH/PUSCH scheduling and Single DCI Multi-Cell PDSCH/PUSCH scheduling may be used simultaneously, and the control unit 270 may simultaneously perform the control based on both of single DCI multi-slot PDSCH/PUSCH scheduling and Single DCI Multi-Cell PDSCH/PUSCH scheduling in parallel.

The control unit 270 may apply a different configuration to at least one of the cells, slots, or channels to be scheduled by the DCI for single DCI multi-slot PDSCH/PUSCH scheduling and the DCI for Single DCI Multi-Cell PDSCH/PUSCH scheduling. The cell type (primary cell (PCell), primary secondary cell (PSCell) and secondary cell (SCell)) may not be particularly limited, and the cell group (master or secondary) may be targeted. The channel type is also not particularly limited, and may be either in the UL direction or in the DL direction. Here, the PDSCH/PUSCH may be targeted.

When the scheduling of a combination of multiple cells (Set of cells) is instructed using Single DCI Multi-Cell PDSCH/PUSCH scheduling, the control unit 270 may assume the multiple cells to be scheduled as described below. Specifically, the control unit 270 may assume that a scheduling cell that receives DCI for Single DCI Multi-Cell PDSCH/PUSCH scheduling (DCI format 0_X/1_X) and a scheduled cell designated by the DCI are targets of the multiple cells.

Thus, the cell to which the DCI is transmitted may be called a scheduling cell, and the cell designated by the DCI may be called a scheduled cell. Further, the multiple cells scheduled simultaneously by the DCI may be called co-scheduled cells.

More specifically, the control unit 270 may assume the targets of the multiple cells based on an information element (IE) relating to a configuration of a serving cell included in the RRC message. The example of the IE relating to the configuration of the serving cell includes servingCellConfig or servingCellConfigCommon (see 3GPP TS 38.331). However, the present disclosure is not limited to the above IE, and different IEs relating to the serving cell may be used.

The control unit 270 may perform the configuration relating to the multiple cells based on the identification information (ID) of a combination of multiple cells (Set of cells) included in the RRC message. For example, a field of MultiCellScheduling-SetId (a tentative name may be used) may be provided as an ID of a Set of cells. The specific example of the field will be described later.

The control unit 270 may perform the configuration relating to the multiple cells based on an RRC message in which the field described above is configured for each of the scheduling cell and the scheduled cell. That is, the field may be provided separately for the scheduling cell and the scheduled cell.

Alternatively, the control unit 270 may perform the configuration relating to the multiple cells based on a field of carrier indication (CI) included in the DCI and/or the RRC message and associated with a combination of multiple cells. For example, a field may be provided for reporting an nCI-Value (a tentative name may be provided) as a value of n_CI linked with a Set of cells.

Further, the control unit 270 may assume that Single DCI Multi-Cell PDSCH/PUSCH scheduling is applied to at least one of the scheduling cell that receives the DCI for Single DCI Multi-Cell PDSCH/PUSCH scheduling (DCI format 0_X/1_X) and the scheduled cell instrcuted by the DCI. In other words, the control unit 270 may assume that Single DCI Multi-Cell PDSCH/PUSCH scheduling is applied only to one type of the scheduling cell and scheduled cell, not applied to both the cells.

In this case, the control unit 270 may assume that Single DCI Multi-Cell PDSCH/PUSCH scheduling is applied to the scheduling cell, or to a reference cell in which a search space for monitoring the DCI is configured.

The reference cell may be interpreted as a cell for counting the number of the DCI size/PDCCH candidates (BD)/CCEs of the DCI format 0_X/1_X, and one cell for counting the number of the DCI size/PDCCH candidates (BD)/CCEs of the PDCCH that performs scheduling on the cells included in each Set of cells may be configured for each Set of cells.

In addition, the control unit 270 may perform the configuration relating to the cell to which scheduling is applied based on the information element (IE) relating to the configuration of the serving cell included in the RRC message. As the IE relating to the configuration of the serving cell, for example, a field that reports the configuration of the cell included in a Set of cells of Single DCI Multi-Cell PDSCH/PUSCH scheduling may be provided in the servingCellConfig described above.

For example, the control unit 270 may perform the configuration relating to the cell to which Single DCI Multi-Cell PDSCH/PUSCH scheduling is applied based on a field of carrier indication (CI) included in the information element. As a specific example, a field (MultiCellScheduling-Set-Config, a tentative name may be used) for reporting the configuration of a Set of cells of multi-cell scheduling is defined in the servingCellConfig, and an nCI-Value (a tentative name may be used) may be notified as a value of n_CI in the field.

The control unit 270 may perform the configuration relating to the cell to which Single DCI Multi-Cell PDSCH/PUSCH scheduling is applied, based on the RRC message in which the field is configured for a combination of the multiple cells. For example, a field for reporting the configuration of the joint coding table is defined in the MultiCellScheduling-Set-Config, and the control unit 270 may perform the configuration according to the field.

Further, the gNB 100 may have a function equivalent to the UE 200 described above. Specifically, the gNB 100 (the control signal and reference signal processing unit 240) may constitute a transmission unit that transmits the downlink control information that instructs scheduling targeted for a combination of multiple cells, and the gNB 100 (the control unit 270) may constitute a control unit that performs the configuration of the downlink control information.

### (3) Operation of radio communication system

Next, an operation of the radio communication system 10 will be described. Specifically, the operation relating to a framework of RRC layer configuration for Single DCI Multi-Cell PDSCH/PUSCH scheduling will be described.

### (3.1) Assumption and problem

As described above, the radio communication system 10 may support the function for scheduling PDSCH/PUSCH of multiple CCs (Single DCI Multi-Cell PDSCH/PUSCH scheduling) using the single (one) DCI.

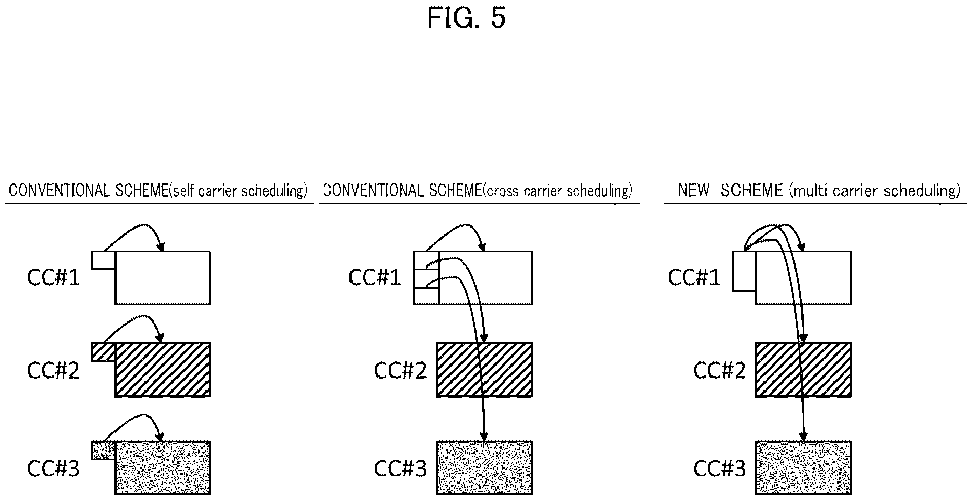

FIG. 5 illustrates an example of a scheduling scheme that can be supported by the radio communication system 10. Single DCI Multi-Cell PDSCH/PUSCH scheduling (Single DCI Multi-carrier PDSCH/PUSCH scheduling) has the following features in comparison with a scheme (conventional scheme) of preparing DCI for each CC and performing scheduling one by one.
- (Advantage): The load (the number of blind decodes (BDs)) due to monitoring of DCI (PDCCH) can be reduced. In addition, the overall PDCCH overhead can be reduced (it is more effective as the size of Single DCI is smaller than DCI of the conventional scheme × the number of CCs).
- (Disadvantage): It is not possible to change instructions in detail for each CC (if making it possible to change, the size of Single DCI will increase, thereby increasing an error rate and overhead of PDCCH). If there is an error in the PDCCH, the data reception on all multiple CCs will fail.

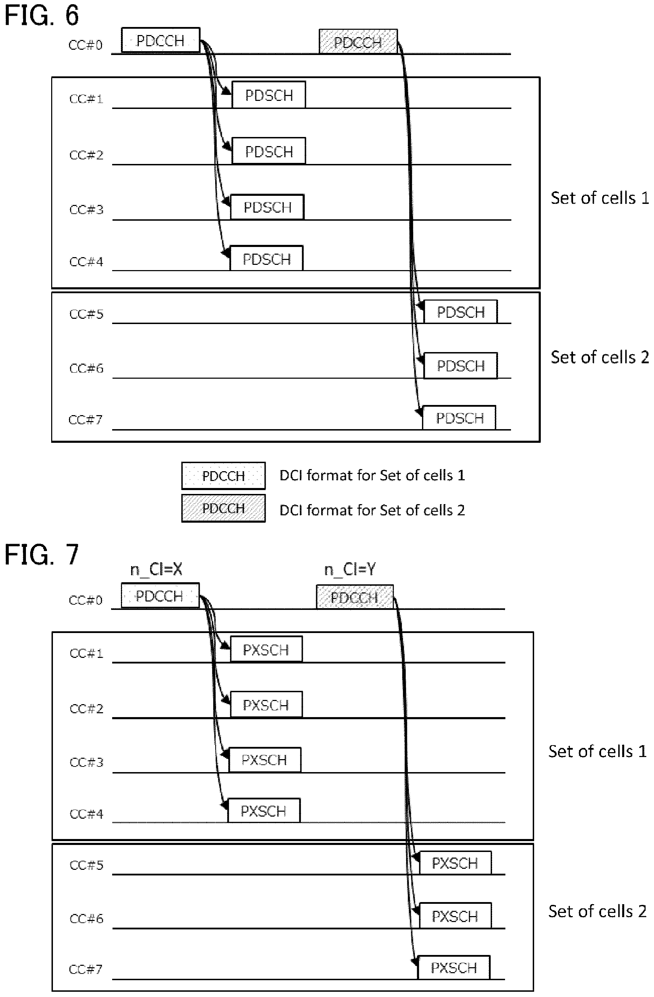

FIG. 6 illustrates an example of PDSCH scheduling using Single DCI Multi-Cell PDSCH/PUSCH scheduling. As described above, the DCI that performs scheduling on PUSCH/PDSCH of multiple cells using the single (one) DCI may be called DCI format 0_X/1_X (or DCI format 0_3/1_3).

The DCI format 0_X/1_X can simultaneously schedule a combination of cells included in a Set of cells to be scheduled. The following requirements may be applied to the Set of cells:
- One set of cells may include up to four cells.
- Optional cell is included in only one set of cells.

In FIG. 6, an example is illustrated in which Set of cells 1 includes CC#1/2/3/4 and Set of cells 2 includes CC#5/6/7. The respective DCI formats of Sets of cells 1 and 2 may be included in separate PDCCHs.

The cell used for counting DCI size/PDCCH candidate (BD) /number of CCEs may be called the reference cell. One cell used for counting DCI size/PDCCH candidate (BD)/number of CCEs of the PDCCH that performs scheduling on the cells included in each Set of cells may be configured for each Set of cells. In FIG. 6, for example, the reference cell of Set of cells 1 may be CC#1, and the reference cell of Set of cells 2 may be CC#5. Here, the cell and the CC may be read interchangeably.

In this case, DCI size/PDCCH candidates (BD)/number of CCEs of the PDCCH (DCI for set of cells 1) may be counted in CC#1. In addition, DCI size/PDCCH candidates (BD)/number of CCEs of the PDCCH (DCI for set of cells 2) may be counted in CC#5.

FIG. 7 illustrates a notification example of parameters of carrier indication in Single DCI Multi-Cell PDSCH/PUSCH scheduling. As illustrated in FIG. 7, a value of parameter n_CI (carrier indication) when determining an CCE index of PDCCH may be configured differently for each Set of cells. FIG. 7 illustrates an example in which n_CI = X is configured in the first PDCCH and n_CI = Y is configured in the next PDCCH.

Regarding the framework of Single DCI Multi-Cell PDSCH/PUSCH scheduling as described above, it is necessary to consider the configuration relating to a Set of cells such as how to configure cells included in a Set of cells, how to configure and interpret a value of n_CI for each Set of cells, how to configure the joint coding/encoding/indication table, how to configure the fields (including Configurable field) included in the DCI format 0_X/1_X, and how to configure the search space (SS) that monitors the DCI format 0_X/1_X.

### (3.2) Overview of operation

In the following operation example, a description will be given of operations and regulations relating to the framework of Single DCI Multi-Cell PDSCH/PUSCH scheduling, especially, the framework relating to the RRC configurations.

The following operation example may include the following options:
- Opt. 1: Single DCI Multi-Cell PDSCH/PUSCH scheduling (Set of cells) is configured for a scheduling cell and each scheduled cell.
- Opt. 2: Single DCI Multi-Cell PDSCH/PUSCH scheduling (Set of cells) is configured for at least one cell of a scheduling cell or a scheduled cell.

Specifically, the operation example may include application examples targeted for the following parameters.
- Application example 1: Cells included in a Set of cells
- Application example 2: Value of n_CI for each Set of cells
- Application example 3: Joint coding/encoding/indication table for each Set of cells
- Application example 4: Configurable field included in DCI format 0_X/1_X for each Set of cells
- Application example 5: Presence of field included in DCI format 0_X/1_X for each Set of cells
- Application example 6: Search space that monitors DCI format 0_X/1_X

As described above, the DCI format 0_X/1_X may be read as the DCI format 0_3/1_3. In addition, the name of the RRC parameter (IE, field) may include a tentative name and may be called by another name.

### (3.3) Operation example

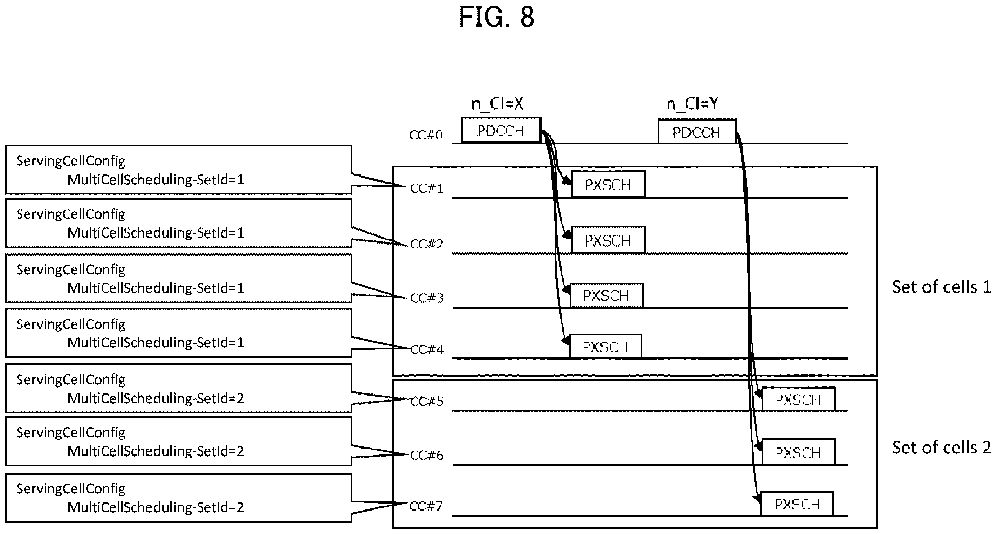

FIG. 8 illustrates a configuration example of Single DCI Multi-Cell PDSCH/PUSCH scheduling using an RRC parameter related to Opt. 1 of the operation example.

As illustrated in FIG. 8, the information element relating to the serving cell configuration may be used. Specifically, the configuration relating to Single DCI Multi-Cell PDSCH/PUSCH scheduling may be included in servingCellConfig/servingCellConfigCommon/PhysicalCellGro upConfig.

For example, as illustrated in FIG. 8, MultiCellScheduling-SetId (1 and 2) may be configured in servingCellConfig. MultiCellScheduling-SetId may correspond to Set of cells (1 and 2). As illustrated in FIG. 8, MultiCellScheduling-SetId may be configured for each CC (which may be read as a cell).

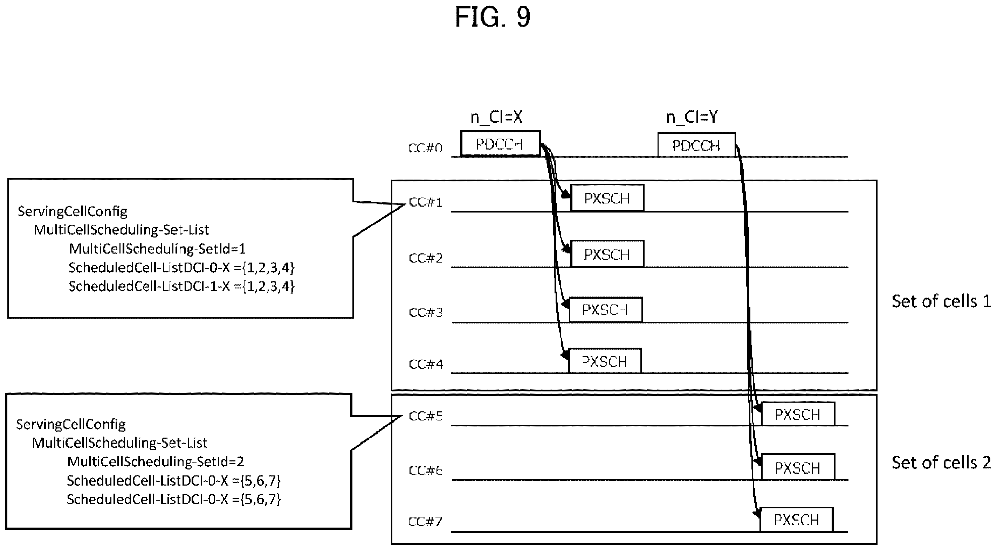

FIG. 9 illustrates a configuration example of Single DCI Multi-Cell PDSCH/PUSCH scheduling using an RRC parameter related to Opt. 2 of the operation example.

As illustrated in FIG. 9, the information element relating to the serving cell configuration may be used even in Opt. 2. Specifically, the configuration relating to Single DCI Multi-Cell PDSCH/PUSCH scheduling may be included in servingCellConfig/servingCellConfigCommon/PhysicalCellGro upConfig.

For example, as illustrated in FIG. 9, MultiCellScheduling-SetId (1 and 2) may be configured in servingCellConfig. MultiCellScheduling-SetId may include ScheduledCell-ListDCI-0-X = {1,2,3,4} / = {5,6,7}, and may correspond to Set of cells (1 and 2). MultiCellScheduling-SetId may be configured for each Set of cells.

FIG. 9 illustrates an example where, in Set of cells 1, the reference cell is CC#1, which is configured in the reference cell. Further, FIG. 9 illustrates an example where, in Set of cells 2, the reference cell is CC#5, which is configured in the reference cell. Here, it may be configured in the scheduling cell or in a different cell.

In Opt. 2, the cell to be configured (which may be read as the cell to which Single DCI Multi-Cell PDSCH/PUSCH scheduling is applied; hereinafter, the same shall be applied) may be the scheduling cell or the reference cell (the scheduling cell or the cell to which the SS that monitors DCI of DCI format 0_X/1_X is configured). Alternatively, the cell to be configured may be the scheduled cell other than the scheduling cell or the reference cell. If the scheduling cell is included in the scheduled cell, it may be interpreted as the scheduling cell.

Among the fields included in MultiCellScheduling-Set-Config which is an RRC parameter, only some fields may be configured for the scheduling cell/each scheduled cell, and the other fields may be configured for at least one cell of the scheduling cell/scheduled cell.

For example, MultiCellScheduling-SetId may be configured for the scheduling cell/each scheduled cell, and the other fields may not be configured (absent) except for a specific cell.

Further, an nCI-Value (tentative name) which is a value of n_CI linked with a Set of cells may be configured for the scheduling cell/each scheduled cell, and may not be configured (absent) except for a specific cell.

### (3.4) Application example

### (3.4.1) Application example 1

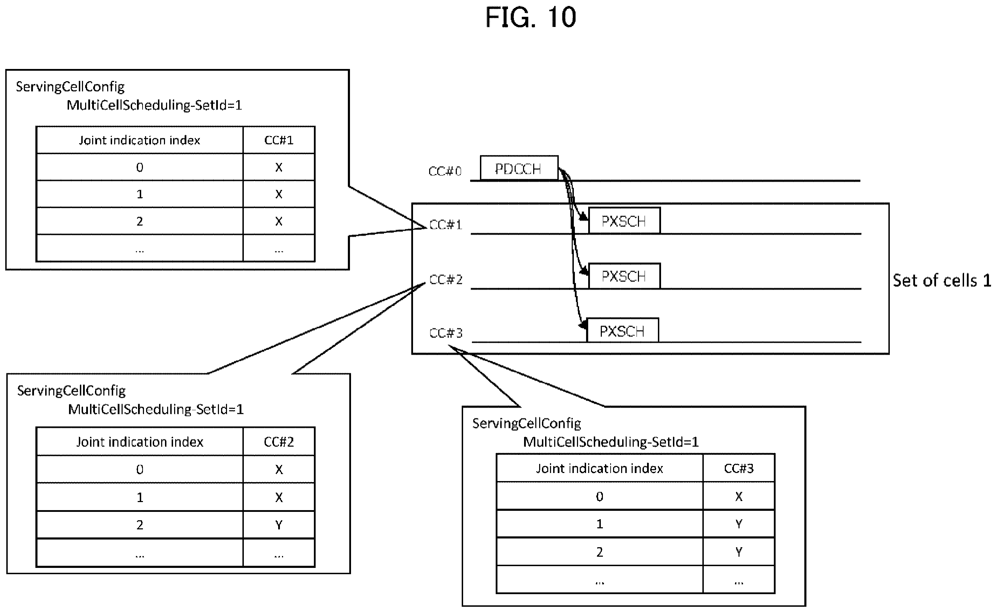

As a configuration method of the cells included in a Set of cells, in the case of Opt. 1, any of the following may be applied:
- Opt. 1-1: A field for reporting MultiCellScheduling-SetId (tentative name) which is the ID of a Set of cells is specified, and the field may be configured for the scheduling cell/each scheduled cell (see FIG. 10).

Here, a separate field is specified for each of UL/DL, which may be configured by this field.
- Opt. 1-2: A field for reporting an nCI-Value (tentative name) which is a value of n_CI linked with a Set of cells is specified, and the field may be configured for the scheduling cell/each scheduled cell.

Here, a separate field is specified for each of UL/DL, which may be configured by this field.

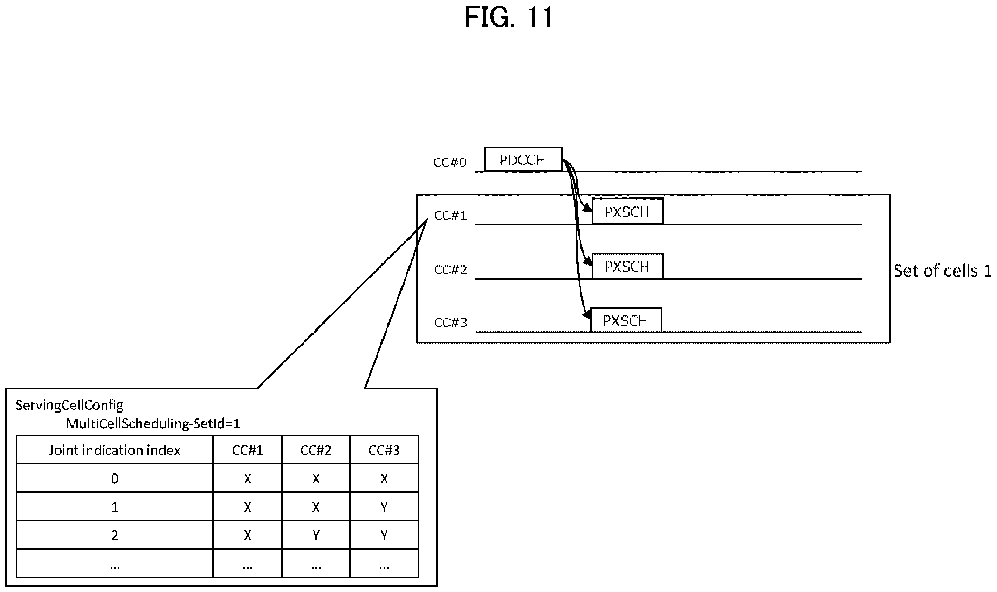

As the configuration method of the cells included in a Set of cells, in the case of Opt. 2, a field for reporting the configuration of cells included in a set of multi-cell scheduling is specified in servingCellConfig, which may be configured by this field (see FIG. 11).

Here, a separate field is specified for each of UL/DL, which may be configured by this field (for example: ScheduledCell-ListDCI-0-X/ScheduledCell-ListDCI-1-X).

The type-2 field (Frequency Domain Resource Allocation (FDRA)/HARQ Process Number (HPN) /Modulation and Coding Scheme (MCS)/Redundancy Version (RV)/New-Data Indicator (NDI)/Transmit Power Control (TPC) command for scheduled PUSCH/PTRS-DMRS association) included in the DCI format 0_X/1_X may be linked with each cell included in the Set of cells according to one of the following.
- Alt. 1: An order of cells configured by ScheduledCell-ListDCI-0-X/ScheduledCell-ListDCI-1-X which is an RRC parameter (from MSB/LSB of the DCI field).
- Alt. 2: An order of indexes of cells (ascending order or descending order) configured to be included in the same set in RRC (from MSB/LSB of the DCI field).
- Alt. 3: An order of indexes of cells (ascending order or descending order) configured to be scheduled simultaneously by DCI (from MSB/LSB of the DCI field).

### (3.4.2) Application example 2

As a configuration method of a value of n_CI for each Set of cells, in the case of Opt. 1, a field for reporting an nCI-Value (tentative name) which is a value of n_CI linked with a Set of cells is specified, and the field may be configured for a scheduling cell/each scheduled cell (similar to Alt. 2 above).

As the configuration method of the value of n_CI for each Set of cells, in the case of Opt. 2, a field for reporting the configuration of a Set of cells of multi-cell scheduling, that is, MultiCellScheduling-Set-Config may be specified in servingCellConfig, and the value of the n_CI, that is, the nCI-Value, may be configured in the field.

Further, a method of interpreting the value notified by the RRC parameter nCI-Value may be performed according to one of the following:
- Alt. 1: The value used for CCE index calculation is interpreted as being notified by the nCI-Value, and the linkage between the nCI-Value and the value notified by a set of cell indicator included in the DCI format 0_X/1_X is specified and notified.

Here, any of the following may be applied to a range of possible values.
- Alt. 1-1: Any value of 0 to 11 (which are merely examples and may be other values) is notified.

The linkage with the value notified by a set of cell indicator may be configured by RRC.
- Alt. 1-2: Assuming that "0 to 7" is assigned (maximum) to n_CI in cross-carrier scheduling of single cell, any value of 8 to 11 (which are merely examples and may be other values) is notified.

The value notified by a set of cell indicator may be nCI-Value - 8.
- Alt. 1-3: If the range of n_CI values actually configured in cross-carrier scheduling of single cell is 0 to X (X ≧ 0), any value of X + 1 to 11 (which are merely examples and may be other values) is notified.

The value notified by a set of cell indicator may be nCI-Value - (X + 1).
- Alt. 2: The difference from the maximum value of the values of n_CI for cross-carrier scheduling of single cell is interpreted to be notified by the nCI-Value, and the value is interpreted as the value notified by a set of cell indicator in the DCI format 0_X/1_X.

The range of possible values of the nCI-Value may be 0 to 3. In addition, the value of the n_CI used in the CCE index calculation of the Set of cells may be one of the following:
- Alt. 2-1: Assuming that "0 to 7" is assigned (maximum) to n_CI in cross-carrier scheduling of single cell, 8 + nCI-Value is configured.
- Alt. 2-2: If the range of values of n_CI actually configured in cross-carrier scheduling of single cell is 0 to X (X ≧ 0), any value of X + 1 to 11 (which are merely examples and may be other values) is notified.

### (3.4.3) Application example 3

As a configuration method of the joint coding/encoding/indication table for each Set of cells, Opt. 1/Opt. 2 as illustrated in FIGS. 10 and 11 (described later) may be applied to at least one of the joint coding tables that report code points for TDRA/rate matching indicator/ZP (Zero Power)-CSI-RS trigger/TCI (Transmission Configuration Indication)/SRS request/SRS offset indicator/co-scheduled cell indicator included in the DCI format 0_X/1_X.

The following fields (tentative names may be used) are exemplified as the RRC fields.
- Joint-TDRA-ListDCI-1-X, Joint-TDRA-ListDCI-0-X, Joint-RateMatchIndication-ListDCI-1-X, Joint-ZP-CSI-RS-Trigger-ListDCI-1-X, Joint-TCI-ListDCI-1-X, Joint-SRS-Request-ListDCI-1-X, Joint-SRS-OffsetIndicator-ListDCI-1-X, Joint-SRS-Request-ListDCI-0-X, Joint-SRS-OffsetIndicator-ListDCI-0-X, ScheduledCellCombo-ListDCI-1-X, and ScheduledCellCombo-ListDCI-0-X

Further, when the co-scheduled cell combination table is not configured, the co-scheduled cell indicator may be assumed not to be included in the DCI format 0_X/1_X, or the value notified by the co-scheduled cell indicator may be ignored.

FIG. 10 illustrates a configuration example of the joint coding/encoding/indication table when Single DCI Multi-Cell PDSCH/PUSCH scheduling is applied (in the case of Opt. 1). As illustrated in FIG. 10, in the case of Opt. 1, the field is configured for a scheduling cell/each scheduled cell, and may be linked with a Set of cells based on a Set of cells ID configured for each cell and/or a value of n_CI.

FIG. 11 illustrates a configuration example of the joint coding/encoding/indication table when Single DCI Multi-Cell PDSCH/PUSCH scheduling is applied (in the case of Opt. 2). As illustrated in FIG. 11, in the case of Opt. 2, a field for reporting the configuration of the joint coding table may be specified in MultiCellScheduling-Set-Config, and the joint coding/encoding/indication table may be configured by this field.

### (3.4.4) Application example 4

As a configuration method of configurable field included in the DCI format 0_X/1_X for each Set of cells, any of the following may be applied to at least one of Configurable field Antenna port/precoding info and number of layers/SRS resource indicator.

In the case of Opt. 1, an RRC field for reporting a configuration type of the configurable field may be configured for a scheduling cell/each scheduled cell, and may be linked with a Set of cells based on a Set of cells ID configured for each cell and/or a value of n_CI.

In the case of Opt. 2, an RRC field for reporting a configuration type of the configurable field is specified in MultiCellScheduling-Set-Config, which may be configured by this field.

The following fields (tentative names may be used) are exemplified as the RRC fields.
- AntennaPort-TypeDCI-1-X, AntennaPort-TypeDCI-0-X, PrecodingInfo-NrofLayers-TypeDCI-0-X, and SRS-ResourceIndicator-TypeDCI-0-X

### (3.4.5) Application example 5

As a configuration method of the presence of a field included in the DCI format 0_X/1_X for each Set of cells, any of the following may be applied to at least one of field priority indicator/SCell dormancy/PDCCH monitoring adaptation/minimum applicable offset/Enhanced Type-3 codebook indicator/HARQ-ACK retransmission indicator/PUCCH cell indicator with which it is possible to configure whether or not to be included in the DCI format 0_X/1_X.

In the case of Opt. 1, an RRC field for reporting a configuration of the presence of the DCI field is configured for a scheduling cell/each scheduled cell, and may be linked with a Set of cells based on a Set of cells ID configured for each cell and/or a value of n_CI.

In the case of Opt. 2, an RRC field for reporting a configuration of the presence of the DCI field may be specified in MultiCellScheduling-Set-Config, which may be configured by this field.

The following fields (tentative names may be used) are exemplified as the RRC fields.
- PriorityIndicator-PresenseDCI-1-X, PriorityIndicator-PresenseDCI-0-X, ScellDormancy-PresenseDCI-1-X, ScellDormancy-PresenseDCI-0-X, PDCCHMonitorAdaptation_PresenseDCI-1-X, PDCCHMonitorAdaptation_PresenseDCI-0-X, MinApplicableSchedulingOffset_PresenseDCI-1-X, and MinApplicableSchedulingOffset_PresenseDCI-0-X

### (3.4.6) Application example

The search space (SS) for monitoring the DCI format 0_X/1_X is specified to be configured for a scheduling cell, or both a scheduling cell and a reference cell.

If the search space is configured in the reference cell, all the fields included in the search space may be absent except for searchspace Id and norofcandidate (the number of PDCCH candidates per aggregation level).

Further, the cell in which the fields other than searchspace Id and norofcandidate are configured may be interpreted as the scheduling cell.

### (4) Operation and effects

According to the embodiment described above, the following operation and effects are obtained. As described above, when Single DCI Multi-Cell PDSCH/PUSCH scheduling is applied, Single DCI Multi-Cell PDSCH/PUSCH scheduling (Set of cells) may be configured for a scheduling cell and each scheduled cell (Opt. 1). Alternatively, Single DCI Multi-Cell PDSCH/PUSCH scheduling (Set of cells) may be configured for at least one cell of a scheduling cell or a scheduled cell (Opt. 2). In addition, the UE 200 may assume which option is applied based on the information element (which may include the field) included in the RRC message, or based on the configuration in advance.

This allows the UE 200 to perform an appropriate configuration even when scheduling is performed simultaneously for multiple cells using Single DCI Multi-Cell PDSCH/PUSCH scheduling.

In the present embodiment, the UE 200 may perform the configuration relating to the multiple cells based on a field of carrier indication (CI) included in the DCI (DCI format 0_X/1_X) or included an RRC message, and associated with a combination of the multiple cells, or based on an ID of Set of cells. This makes it possible to achieve an efficient cell configuration while using Single DCI Multi-Cell PDSCH/PUSCH scheduling.

### (4) Other embodiments

Although the embodiment has been described above, the present disclosure is not limited to the description of the embodiment, and it will be obvious to those skilled in the art that various modifications and improvements are possible.

For example, although the embodiment described above has been described using the terms "single DCI multi-slot PDSCH/PUSCH scheduling" and "single DCI Multi-Cell PDSCH/PUSCH scheduling", these terms may be called by different names as long as they refer to the function for scheduling PDSCH/PUSCH across multiple slots using one piece of DCI, or the function for scheduling PDSCH/PUSCH across multiple CCs using single (one) DCI. In addition, as described above, the channels are not limited to PDSCH/PUSCH, and may include control channels and/or other data channels.

In the above disclosure, terms such as configure, activate, update, indicate, enable, specify, and select may be read interchangeably. Similarly, terms such as link, associate, correspond, and map may be read interchangeably, and terms such as allocate, assign, monitor, and map may be read interchangeably.

In addition, terms such as specific, dedicated, UE-specific, and UE-dedicated may be read interchangeably. Similarly, terms such as common, shared, group-common, UE-common, and UE-shared may be read interchangeably.

The block diagram (FIG. 4) used in the description of the above-described embodiment illustrates blocks in units of functions. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

Further, the above-described gNB 100 and UE 200 (the devices) may function as a computer that performs processing of a radio communication method of the present disclosure. FIG. 12 is a diagram illustrating an example of a hardware configuration of the device. As illustrated in FIG. 12, the device may be configured as a computer device including a processor 1001, a memory 1002, a storage 1003, a communication device 1004, an input device 1005, an output device 1006, a bus 1007, and the like.

Furthermore, in the following description, the term "device" can be read as meaning circuit, device, unit, or the like. The hardware configuration of the device may include one or more devices illustrated in the figure or may not include some of the devices.

Each of the functional blocks of the device (FIG. 4) is implemented by means of any of hardware elements of the computer device or a combination of the hardware elements.

Each function in the device is realized by loading predetermined software (programs) on hardware such as the processor 1001 and the memory 1002 so that the processor 1001 performs arithmetic operations to control communication via the communication device 1004 and to control at least one of reading and writing of data on the memory 1002 and the storage 1003.

The processor 1001 controls the whole computer by, for example, running an operating system. The processor 1001 may be configured with a0 central processing unit (CPU), which includes interfaces with peripheral apparatus, control apparatus, computing apparatus, a register, and so on.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus." The above recording medium may be a database including the memory 1002 and/or the storage 1003, a server, or any other appropriate medium.

The communication apparatus 1004 is hardware (transmitting/receiving device) for allowing inter-computer communication via at least one of wired and wireless networks, and may be referred to as, for example, a "network device," a "network controller," a "network card," a "communication module," and so on.

The communication apparatus 1004 may be configured to include a high frequency switch, a duplexer, a filter, a frequency synthesizer, and so on in order to realize, for example, at least one of frequency division duplex (FDD) and time division duplex (TDD).

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the device may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these. According to the above, a case is described in which there is a single network node other than the base station 10. However, a combination of multiple other network nodes may be considered (e.g., MME and S-GW).

Information or signals (information and the like) may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any of a one of various different technologies. For example, data, an instruction, a command, information, a signal, a bit, a symbol, a chip, or the like, described throughout the present application, may be represented by a voltage, an electric current, electromagnetic waves, magnetic fields, magnetic particle, optical fields, a photon, or a combination thereof.

It should be noted that a term used in the present specification and/or term required for understanding of the present specification may be replaced by a term having the same or similar meaning. For example, a channel and a symbol may be a signal (signaling). Further a signal may also be a message. Further, the component carrier (CC) may be referred to as a carrier frequency, cell, frequency carrier, or the like.

As used in the present disclosure, the terms "system" and "network" are used interchangeably.

Furthermore, the information, parameters, and the like, described in the present disclosure may be expressed using absolute values, relative values from a predetermined values, or they may be expressed using corresponding different information. For example, a radio resource may be what is indicated by an index.

The names used for the parameters described above are not used as limitation. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells (also called sectors). When a base station accommodates a plurality of cells, the entire coverage area of the base station can be partitioned into multiple smaller areas, and each smaller area can provide communication services through base station subsystems (for example, indoor small base stations (Remote Radio Heads (RRHs))).

The term "cell" or "sector" refers to part of or the entire coverage area of at least one of a base station and a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS), " "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a mobile station (hereinafter, a user terminal). For example, each aspect/embodiment of the present disclosure may be applied to the structure that replaces a communication between a base station and a mobile station with a communication between a plurality of mobile stations (for example, which may be referred to as "Device-to-Device (D2D)," "Vehicle-to-Everything (V2X)," and the like). In this case, mobile stations may have the functions of the base stations described above. The words such as "uplink" and "downlink" may be interpreted as the words corresponding to the terminal-to-terminal communication (for example, "side"). For example, an uplink channel, a downlink channel and so on may be interpreted as a sidelink channel (or sidelink).

Likewise, the mobile station in the present disclosure may be interpreted as base station. In this case, the base station may have the functions of the mobile station described above.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe, " a "long subframe, " a "slot," or the like. A TTI that is shorter than a normal TTI may be referred to as a "shortened TTI, " a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

"Means" included in the configuration of each of the above apparatuses may be replaced by "parts", "circuits", "devices", etc.

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

In the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, where an article is added by translation, for example "a", "an", and "the", the disclosure may include that the noun following these articles is plural.

As used herein, the term "determining" may encompasses a wide variety of actions. For example, "determining" may be regarded as judging, calculating, computing, processing, deriving, investigating, looking up (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing and the like. That is, "determining" may be regarded as a certain type of action related to determining.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

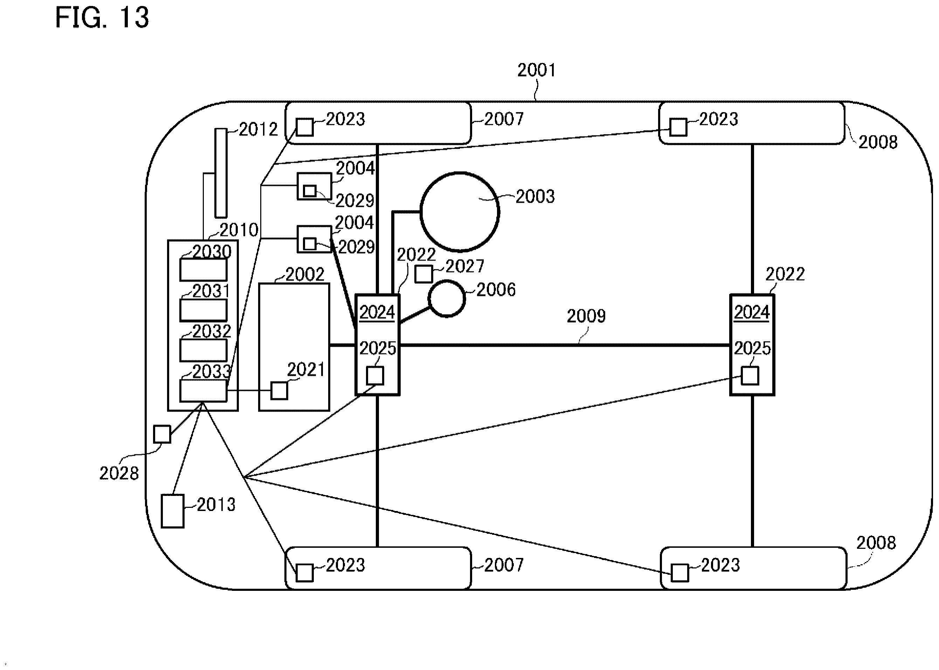

FIG. 13 shows a configuration example of a vehicle 2001. As shown in FIG. 13, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user. The electronic control unit 2010 includes a microprocessor 2031, a memory (ROM, RAM) 2032, and a communication port (IO port) 2033. The electronic control unit 2010 receives signals from the various sensors 2021-2027 provided in the vehicle. The electronic control unit 2010 may be referred to as an ECU (Electronic control unit).

The signals from the various sensors 2021 to 2028 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 1 by using information obtained from the external device through the communication module 2013 or the like.

The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 1 via a communication port. For example, the communication module 2013 transmits and receives data via a communication port 2033, to and from the drive unit 2002, the steering unit 2003, the accelerator pedal 2004, the brake pedal 2005, the shift lever 2006, the left and right front wheels 2007, the left and right rear wheels 2008, the axle 2009, the microprocessor 2031 and the memory (ROM, RAM) 2032 in the electronic control unit 2010, and sensors 2021 to 2028 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2028 described above input to the electronic control unit 2010, information obtained based on the signals, and information based on an input from the outside (a user) obtained via the information service unit 2012, to the external apparatus via radio communication. The electronic control unit 2010, the various sensors 2021 to 2028, the information service unit 2012, and the like may be referred to as input units that receive input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021-2028, etc., mounted in the vehicle 2001.

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### [Additional notes]

The above disclosure may be expressed as follows. A first feature is a terminal including: a reception unit that receives single downlink control information that instructs scheduling targeted for a combination of multiple cells; and a control unit that assumes that a scheduling cell that receives the downlink control information and a scheduled cell instructed by the downlink control information are targets of the multiple cells.

A second feature is that in the first feature, the reception unit receives a message of a radio resource control layer, and the control unit assumes targets of the multiple cells based on an information element relating to a configuration of a serving cell included in the message.

A third feature is that in the first feature or second feature, the reception unit receives a message of a radio resource control layer, and the control unit performs a configuration relating to the multiple cells based on identification information of a combination of the multiple cells included in the message.

A fourth feature is that in the first to third features, the control unit performs a configuration relating to the multiple cells based on a field of carrier indication included in the downlink control information and associated with a combination of the multiple cells.

A fifth feature is that in the first to fourth features, the control unit performs a configuration relating to the multiple cells based on the message in which a field is configured for each of the scheduling cell and the scheduled cell.

A sixth feature is a terminal including: a reception unit that receives single downlink control information that instructs scheduling targeted for a combination of multiple cells; and a control unit that assumes that the scheduling is applied to at least one of a scheduling cell that receives the downlink control information and a scheduled cell instructed by the downlink control information.

A seventh feature is that in the sixth feature, the control unit assumes that the scheduling is applied to the scheduling cell or a reference cell in which a search space for monitoring the downlink control information is configured.

A eighth feature is that in the sixth feature or seventh feature, the reception unit receives a message of a radio resource control layer, and the control unit performs a configuration relating to a cell to which the scheduling is applied based on an information element relating to a configuration of a serving cell included in the message.

A ninth feature is that in the sixth to eighth features, the control unit performs a configuration relating to a cell to which the scheduling is applied based on a field of carrier indication included in the information element.

A tenth feature is that in the sixth to nineth features, the control unit performs a configuration relating to a cell to which the scheduling is applied, based on the message in which a field is configured for a combination of the multiple cells.

### Reference Signs List

- 10: Radio communication system
- 20: NG-RAN
- 100: gNB
- 200: UE
- 210: Radio signal transmission and reception unit
- 220: Amplifier unit
- 230: Modulation and demodulation unit
- 240: Control signal and reference signal processing unit
- 250: Encoding/decoding unit
- 260: Data transmission and reception unit
- 270: Control unit
- 1001: Processor
- 1002: Memory
- 1003: Storage
- 1004: Communication device
- 1005: Input device
- 1006: Output device
- 1007: Bus
- 2001: Vehicle
- 2002: Drive unit
- 2003: Steering unit
- 2004: Accelerator pedal
- 2005: Brake pedal
- 2006: Shift lever
- 2007: Left and right front wheels
- 2008: Left and right rear wheels
- 2009: Axle
- 2010: Electronic control unit
- 2012: Information service unit
- 2013: Communication module
- 2021: Current sensor
- 2022: Revolution sensor
- 2023: Pneumatic sensor
- 2024: Vehicle speed sensor
- 2025: Acceleration sensor
- 2026: Brake pedal sensor
- 2027: Shift lever sensor
- 2028: Object detection sensor
- 2029: Accelerator pedal sensor
- 2030: Driving support system unit
- 2031: Microprocessor
- 2032: Memory (ROM, RAM)
- 2033: Communication port

## Claims

1. A terminal comprising:
a reception unit that receives single downlink control information that instructs scheduling targeted for a combination of multiple cells; and
a control unit that assumes that a scheduling cell that receives the downlink control information and a scheduled cell instructed by the downlink control information are targets of the multiple cells.

2. The terminal according to claim 1, wherein
the reception unit receives a message of a radio resource control layer, and
the control unit assumes targets of the multiple cells based on an information element relating to a configuration of a serving cell included in the message.

3. The terminal according to claim 1, wherein
the reception unit receives a message of a radio resource control layer, and
the control unit performs a configuration relating to the multiple cells based on identification information of a combination of the multiple cells included in the message.

4. The terminal according to claim 1, wherein
the control unit performs a configuration relating to the multiple cells based on a field of carrier indication included in the downlink control information and associated with a combination of the multiple cells.

5. The terminal according to claim 3, wherein
the control unit performs a configuration relating to the multiple cells based on the message in which a field is configured for each of the scheduling cell and the scheduled cell.

6. A radio communication method in a terminal, comprising:
a step of receiving single downlink control information that instructs scheduling targeted for a combination of multiple cells; and
a step of assuming that a scheduling cell that receives the downlink control information and a scheduled cell instructed by the downlink control information are targets of the multiple cells.
